# EUROPEAN PATENT SPECIFICATION

(11) **EP 2 942 907 B1**
(45) Date of publication and mention of the grant of the patent: **10.10.2018**
(21) Application number: 14167348.3
(22) Date of filing: 07.05.2014
(51) Int. Cl.: H04L 12/24

(54) **Service level management in a network**
Dienststufenverwaltung in einem Netzwerk
Gestion de niveau de service dans un réseau

(43) Date of publication of application: 11.11.2015
(73) Proprietor: Telia Company AB, 16994 Solna (SE)
(72) Inventor: Suominen, Jarkko, 37830 Akaa (FI); Lindblom, Peter, 00380 Helsinki (FI); Isomäki, Pekka, 33960 Pirkkala (FI); Tervo, Mika, 33820 Tampere (FI); Mikola, Janne, 33720 Tampere (FI); Ekholm, Timo, 33710 Tampere (FI)
(74) Representative: Berggren Oy, Helsinki & Oulu

(56) References cited:
- EP-A1- 1 993 231
- US-A1- 2009 081 996

## Description

### TECHNICAL FIELD

The invention concerns in general the technical field of management of network services. Especially the invention concerns a solution for modifying service level within a network for a user through a service management system.

### BACKGROUND OF THE INVENTION

Recently so called communication service providers, such as telecom operators, have enabled a management of services to their customers. Typically the customers are corporate customers who are able to manage their employees' communication services to meet the needs of the corporation in question. The management of the communication services is typically implemented over a user interface provided by the communication service provider. Through the interface the corporate representative, or even the end customer, may access to communication service provider's service management system to adjust settings of their services to better meet the needs.

The increasing complexity of services and service systems has brought many challenges in the service management systems. For example, there is currently no way for customers to describe their networking needs in terms of the users and the applications and the relationships between these. Instead they need to specify IP addresses, IP subnets, TCP ports, Switch ports, Firewall ports and other technicalities to make orders for new services or to make changes to their existing services. This puts an ever increasing burden on customer representatives while their networks are expanding and getting more and more complex. As a manual process it slows down the process of taking new services into use or making changes. Also the probability of misunderstandings and making errors in this manual and complex way of service management is high. The overall picture of who are the users of the customer network and which applications they are allowed to access and with what kind of priorities becomes blurry.

In a document US 2009/0081996 A1 is introduced a solution for differentiated data session access on a wireless communication device. The solution is based on application profiles stored in a user identity module wherefrom a first application profile corresponding to a first network-service application that is launched is retrieved. A data session is established according to the profile data. In other words, the document discloses a profile based establishment of data session, wherein the data session is established according to the stored profile data in the user identity module.

Thus, there is need to establish such a service management solution which mitigate the mentioned challenges with the existing communication management solutions, as at least partly described above.

### SUMMARY OF THE INVENTION

An objective of the invention is to present a method and a server for providing a service level within a network for a user. Another objective of the invention is that the method and the server for providing the service level takes, at least partly, into account an importance set either directly or indirectly for at least some of the applications available in the network.

The objects of the invention are reached by a method and a server as defined by the respective independent claims. Preferred embodiments are covered by the dependent claims.

According to a first aspect, a method for providing a service level in a network for a user, wherein the network comprises information on the at least one user and at least one application associated with the at least one user wherein the information is stored at least in one database, is provided wherein the method comprises classifying, in the at least one database, the at least one application into a group among multiple groups according to an importance set for each of the at least one application wherein the importance set for the at least one application is defined with an indicator; determining utilization of network resources by each of the application by monitoring at least one predetermined characteristic within the network; determining, based on the utilization of the network resources, at least one network parameter for each of the groups wherein the at least one network parameter represents a network configuration with respect to a group; determining, by retrieving information from the at least one database on the at least one application with which the at least one user is associated, a group in which exists at least one most important application associated with the user; and providing the user the service level in the network by setting the at least one network parameter corresponding to the determined group.

In the method the importance set for each of the at least one application wherein the importance set for the at least one application is defined with the indicator may be defined individually for each of the at least one application. The importance set for each of the at least one application wherein the importance set for the at least one application is defined with the indicator may also be defined by classifying each of the at least one application to one or more predetermined application groups, the application groups comprising an individual importance.

According to a second aspect, a server configured to provide a service level in a network for a user, wherein the network comprises information on the at least one user and at least one application associated with the at least one user wherein the information is stored at least in one database, is provided wherein the server comprises one or more processors and a memory including computer program code and wherein the memory and the computer program code configured to, with the processor, cause the server at least to perform: classify, in the at least one database, the at least one application into a group among multiple groups according to an importance set for each of the at least one application wherein the importance set for the at least one application is defined with an indicator; determine utilization of network resources by each of the application by monitoring at least one predetermined characteristic within the network; determine, based on the utilization of the network resources, at least one network parameter for each of the groups wherein the at least one network parameter represents a network configuration with respect to a group; determine, by retrieving information from the at least one database on the at least one application with which the at least one user is associated, a group in which exists at least one most important application associated with the user; and provide the user the service level in the network by setting the at least one network parameter corresponding to the determined group.

The server may be configured to define the importance set for each of the at least one application individually for each of the at least one application wherein the importance set for the at least one application is defined with the indicator. The server may also be configured to define the importance set for each of the at least one application by classifying each of the at least one application to one or more predetermined application groups, the application groups comprising an individual importance wherein the importance set for the at least one application is defined with the indicator.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 illustrates an example of a communication environment wherein the present invention may be applied to.
Figure 2 illustrates an example of a method according to the invention.
Figure 3a and 3b illustrate examples of possible implementations relating to a classification of applications according to of the present invention.
Figure 4 illustrates an example of a server according to present invention.

### DETAILED DESCRIPTION

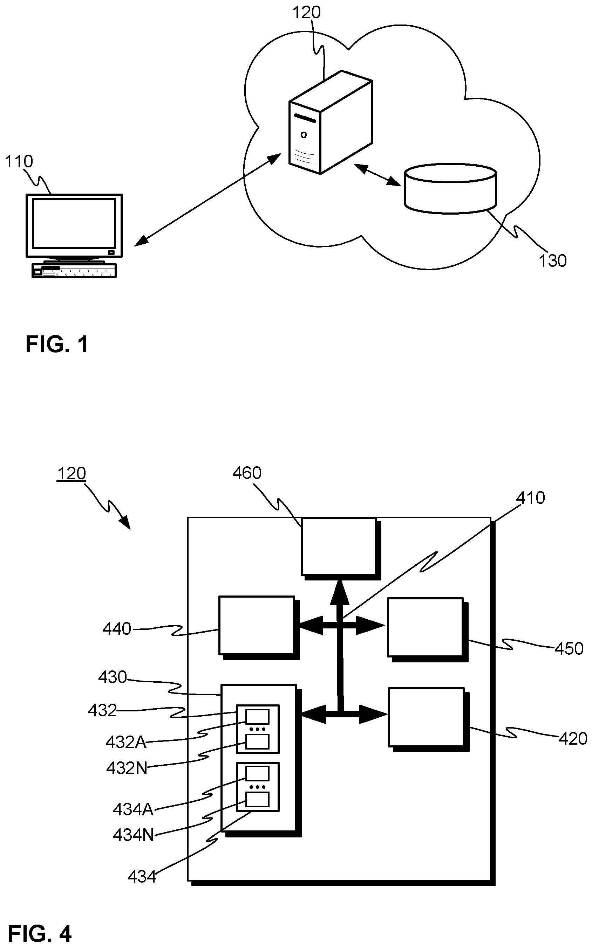

Fig. 1 illustrates an example of a communication environment wherein in the present invention may be applied. A communication service provider, such as a telecom operator, offering communication services to a customer has provided an access to a customer into a service management system. This offers a possibility to manage the communication related services by the customer itself. The customer representative may access the service management system with a computing device 110 available to the customer. The computing device 110 may comprise a specific management application for accessing the service management system or only a web access to the system. The service management system is running in a server 120 and data, such as customer related service data, may be stored in a database 130 accessible by the server 120. Additionally, the server may comprise an interface for communication service provider's network (not illustrated) in order to grant access to the services according to the information stored in the database 130 by signaling any changes made in the service management system to the communication service provider's network. More specifically, the changes are signaled to network elements executing services in the communication service provider's network, or to such elements which monitor users' access to the services. The communication services may be, but not limited to, LAN Services, WAN Services and Security Services, for instance. In its simplest form the communication environment wherein the present invention may be applied is such that the service management is directly arranged within the customer network and the network services are arranged by the customer itself.

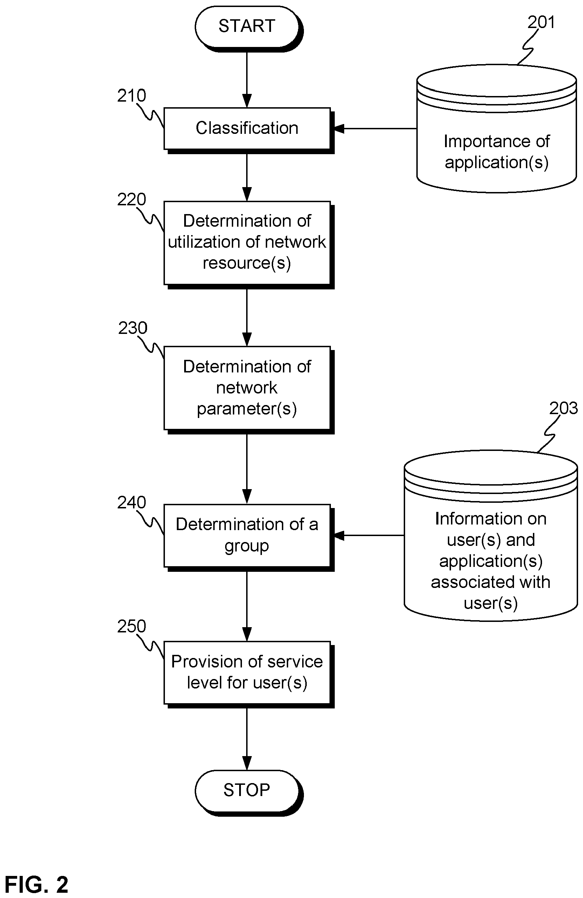

In order to provide the customer representative a tool for managing the network services for users or user groups there is need for defining so called default service level for each of the user. Fig. 2 illustrates an example of a method according to the invention, how the default service level for each of the user within the network may be arranged. A pre-requisite for the determination of service level for at least one user within the customer network is that there is information available on all applications, or at least on those applications which shall be managed through the solution according to the present invention, utilized by at least one user of the customer network. The information may be maintained and stored in a database 201 from where the information may be retrieved. Another pre-requisite for the implementation of the invention is that there exists information on one or more users of the network in question and also information on which application each user within the network may access or utilize. Such information may be maintained and stored in a database 203 from where the information may be retrieved. The databases 201 and 203 may be the same database or separate to each other. The mentioned pieces of information in the databases may be arranged either manually by person entitled to create the information or automatically with some computer implemented methods or in combination of the manual and automatically implemented operation. For example, when a person, such as a customer representative, creates a user account for the network, the information on the user is stored in the database 203. The user is provided with one or more applications he or she needs and information on these are also stored in the database 203. Moreover, when new applications are taken into use and offered for use to the users the person managing the information sets an importance for each of the application. A criterion for setting the importance may e.g. be in corporation use that the applications which are always needed are set more important than e.g. those, which do not directly relate to corporate use or which application have only few users. The above described methods for setting the importance for each of the applications are only examples and are not limiting anyhow the way to set the importance for the application. The information on importance may be set by adding an indicator on the importance to the application data, which may be accessed, or an information table disclosing the information may be established in a network element, such as in the database 201.

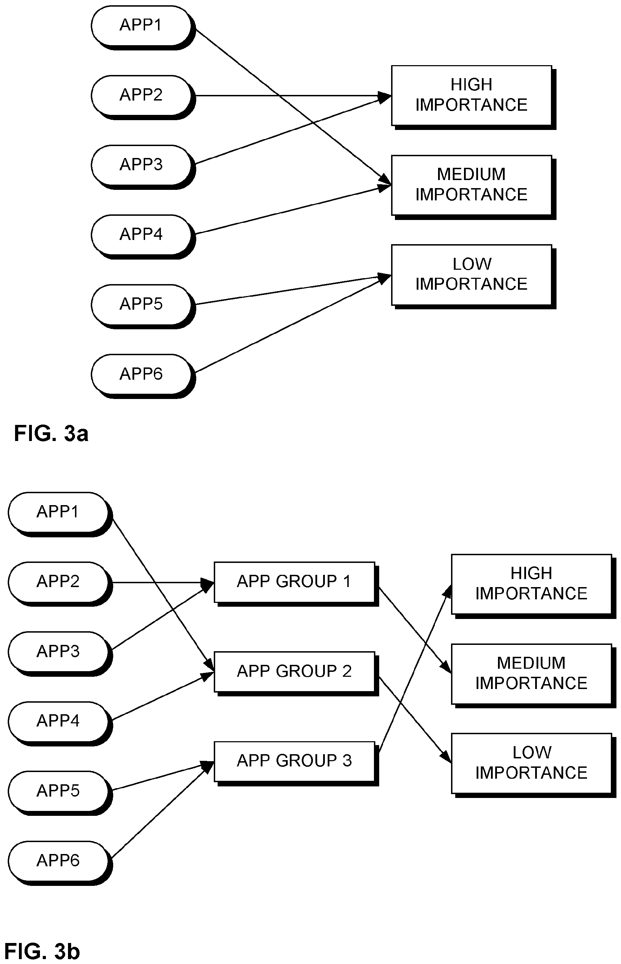

According to an example of the method according to the invention each of the at least one application available for use in a network is classified 210 between at least two groups on a basis of the importance set for applications. The number of applications or groups is not limited anyhow. For example, there may exist three groups called e.g. Low Importance, Medium Importance and High Importance into which groups the applications may be classified. This kind of example is illustrated in Fig. 3a.The groups define their mutual importance within the network.

In some other implementation of the present invention, as illustrated in Fig. 3b, the classification may be arranged in such a way that applications available for use in a network are first classified in application groups representing e.g. a type of application and the application groups are then classified according to their importance. In this kind of arrangement each of the application is either arranged to carry information on the type of application or the information is arranged, either manually or automatically, in some information storage, which can be accessed by a computing unit performing the classification. As a result, the importance for each application may be set through setting the importance for each of the application group.

Reverting back to Fig. 2 disclosing an example of the method according to the invention it is determined a utilization of network resources by each of the application 220 being involved in the management through the present invention. The determination may be arranged by monitoring at least one predetermined characteristic within the network wherein the present invention is applied. The monitoring may be arranged by using a network analyzer component set for monitoring some predetermined characteristics within the network.

In response to the network monitoring it is possible to determine 230, based on the information on the utilization of the network resources, at least one network parameter for each of the importance groups. The term 'network parameter' herein refers to at least one network configuration by means of which it is possible to manage the operation of the network, or network element, in some manner with respect to at least some of the groups.

Now, the method according to the invention has output from step 230 information on at least one network parameter for each of the groups. Next, it is determined all groups in which exist applications utilized by each of the at least one user. This can be performed by retrieving information on applications on which the at least one user is associated from the database 203, comparing the information on the application with each of the applications classified within the groups and comparing the determined groups mutually and finally the group is determined 240 which comprises the most important application exploitable by the user in question. The association may refer, but is not limited to, to an arrangement by means of which it is possible to indicate, which applications the user is entitled to or may utilize in the network.

The user is provided with the service level in the network by setting the network parameters corresponding to the group in which exists the most important application for the user 250.

Above it is described that the users may at least partly be provided on a certain service level on a basis of information received from network monitoring. The monitoring of the network may be arranged with a network analysis tool, which may provide network and system information about network traffic on a flow level. The tool may have knowledge on bandwidth and network locations (IP addresses) of the applications. Parametrization of the different usage classes, where users may be placed in the network happens based on this data. For example, the network locations of the most critical applications from the information security viewpoint may be gathered and this information may be applied on the authorization devices (e.g. firewalls) and routing in such a manner that e.g. users who will be placed into groups lower than a certain group with a certain service level will never have a networked connectivity to these information security critical applications. In this exemplified manner it is possible to utilize information receivable from the network analysis tool.

Also VLAN (Virtual Local Area Network) Quality of Service may be applied on the whole usage class scheme. A service level classified critical may be arranged to receive higher QoS than any lower service class and so on.

It is also possible, according to the inventive idea of the present invention, to apply Application QoS based on the analysis tool results too. Applications which are classified to a certain importance class with high importance may be arranged to comprise a higher QoS than applications which are classified less important importance class, and so on.

Furthermore, on a basis of on the application bandwidth usage detected by the network analysis tool, different bandwidth reservations and limitations may be made for all the importance classes. Total bandwidth may be divided between VLANs in such a manner that "critical" importance class may be configured to receive the most of the bandwidth in such a way that if all users in that usage class would use all the applications in the way they were monitored to be used with the network analyzer, no bandwidth issues would occur. Then again lower importance classes may be configured to receive such a small bandwidth that it would be able to use all the necessary business critical applications detected by the network analysis tool, but that it would not have a possibility of using so much bandwidth that it would interfere with the networks functionality. The bandwidth limits and reservations come from the results of the application bandwidth usage combined with the number of users in the user groups.

The above described examples are described only for illustrative purposes and the utilization of information from the network analysis tool is not limited anyhow to these examples only.

The invention also relates to a server 120 which is configured to implement the method as described above. A server 120 according to an example of the invention is illustrated in Fig. 4. The server 120 comprises, for example, a bus 410, a processor 420, a memory 430, input means 440, output means 450, and a communication interface 460. The bus 410 may include means or methods that enable communication among the elements of the server 120. The system may comprise, or be implemented by, one or more servers, one or more desktop computers, one or more laptop computers, one or more tablet computers, one or more mobile communication terminals or one or more special hardware devices as long as it is capable of implementing the method according to the invention. Thus, in principle any computing device, which comprises necessary hardware and computer program code stored in a memory, may be configured to implement the method as described.

The processor 420 may comprise one or more conventional processors, one or more microprocessors, or one or more processing logics, or any combination of these, that interprets and executes instructions defined by portions of computer program code. The memory 430 may comprise a random access memory (RAM) 432 and/or a read only memory (ROM) 434. The RAM 432 may store information and instructions in a form of portions of computer program code 432A-432N for execution by the processor 420. The ROM 434 may include a conventional ROM device or another type of a static storage device that is configured to store static information and instructions in a form of portions of computer program code 434A-434N for use by the processor 420. The RAM 432 and ROM 434 may be implemented with one or more corresponding memory elements.

The input means 440 may comprise a conventional mechanism that permits inputting information to the server 120, such as a keyboard, a mouse, a pen, a touch screen, voice recognition and/or biometric mechanisms, CD/DVD/Blue-ray drive etc. The output means 450 may comprise a conventional mechanism that outputs information, including a display, a printer, a speaker, etc. The input and output means are not necessarily implemented into the server 120, but may be coupled to the server 120 with some known interfaces either wirelessly or in a wired manner when needed. In some examples of the invention the server does not comprise any input means 440 or output means 450 as the server operates as a standalone entity, which is controlled externally through the communication interface 460. The communication interface 460 may enable the server 120 to communicate with other elements and/or systems, such as networks, as well as with client terminals either directly or indirectly over a network.

The server 120 may perform the operations as described above in response to the processor 420 executing at least one instruction defined in portions of computer program code contained in the computer-readable medium, such as memory. A computer-readable medium may be defined as a physical or logical memory device. The software instructions may be read into the memory from another computer-readable medium, such as a data storage device, or from another device via the communication interface 460. The software instructions may cause the processor 420 to perform method steps and processes as described and thus to enable the operation of the server 120 according to an example of the invention.

As said, Fig. 4 illustrates an example of the server 120 according to the invention. The elements as disclosed in Fig. 4 do not necessarily exist in all implementations of the server 120. For example, the server 120 may not comprise input means 440 and output means 450, but the server 120 may be accessed through the communication interface 460 with applicable devices and systems. As well, the number and type of memories and processors may vary. Further, the amount of portions of computer program code may depend on the implementation.

The server 120 is configured, by means of at least part of the mentioned elements, to implement the method according to an example of the invention. The server 120 may be any device that receives the content data as an input through e.g. the communication interface 460, performs the described method steps and returns or forwards the processed image content data further.

An example of the invention also relates to a non-transitory computer-readable storage medium, which stores at least portions of computer program code, wherein the portions of computer program code are computer-executable to implement the method steps in the server as described. In general, the computer-readable storage medium may include a storage medium or memory medium, such as magnetic or optical media e.g. disc, DVD/CD-ROM, volatile or non-volatile media, such as RAM.

Moreover, the server 120 may be configured to access any necessary external entity, such as databases 201, 203 as described above.

Some advantageous embodiments according to the invention were described above. The invention is not limited to the embodiments described. The inventive idea can be applied in numerous ways within the scope defined by the claims attached hereto.

## Claims

1. A method for providing a service level in a network for a user, wherein the network comprises information on the at least one user and information on at least one application associated with the at least one user wherein the information is stored at least in one database (130; 201, 203) accessible by a server (120) performing the method, the method comprising:
- classifying (210), in the at least one database (130; 201, 203), the at least one application into a group among multiple groups according to an importance set for each of the at least one application wherein the importance set for the at least one application is defined with an indicator,
- determining utilization (220) of network resources by each of the at least one application by monitoring at least one predetermined characteristic within the network,
- determining (230), based on the utilization of the network resources, at least one network parameter for each of the groups wherein the at least one network parameter represents a network configuration with respect to a group,
- determining (240), by retrieving information from the at least one database (130; 201, 203) on the at least one application with which the at least one user is associated, a group in which exists at least one most important application associated with the user, and
- providing (250) the user the service level in the network by setting the at least one network parameter corresponding to the determined group.

2. The method according to claim 1, wherein the importance set for each of the at least one application wherein the importance set for the at least one application is defined with the indicator is defined individually for each of the at least one application.

3. The method according to claim 1, wherein the importance set for each of the at least one application wherein the importance set for the at least one application is defined with the indicator is defined by classifying each of the at least one application to one or more predetermined application groups, the application groups comprising an individual importance.

4. A server (120) configured to provide a service level in a network for a user, wherein the network comprises information on the at least one user and information on at least one application associated with the at least one user wherein the information is stored at least in one database (130; 201, 203) accessible by the server (120), the server (120) comprising
one or more processors (420)
a memory (430) including computer program code
when executed on the one or more processors (420) the computer program code causes the server (120) to:
- classify (210), in the at least one database (130; 201, 203), the at least one application into a group among multiple groups according to an importance set for each of the at least one application wherein the importance set for the at least one application is defined with an indicator,
- determine utilization (220) of network resources by each of the at least one application by monitoring at least one predetermined characteristic within the network,
- determine (230), based on the utilization of the network resources, at least one network parameter for each of the groups wherein the at least one network parameter represents a network configuration with respect to a group,
- determine (240), by retrieving information from the at least one database (130; 201, 203) on the at least one application with which the at least one user is associated, a group in which exists at least one most important application associated with the user, and
- provide (250) the user the service level in the network by setting the at least one network parameter corresponding to the determined group.

5. The server (120) according to claim 4, wherein the server (120) is configured to define the importance set for each of the at least one application individually for each of the at least one application wherein the importance set for the at least one application is defined with the indicator.

6. The server (120) according to claim 5, wherein the server (120) is configured to define the importance set for each of the at least one application by classifying each of the at least one application to one or more predetermined application groups, the application groups comprising an individual importance wherein the importance set for the at least one application is defined with the indicator.

## Patentansprüche

1. Verfahren zum Bereitstellen eines Dienstniveaus in einem Netzwerk für einen Benutzer, wobei das Netzwerk Informationen über den mindestens einen Benutzer und Informationen über mindestens eine mit dem mindestens einen Benutzer assoziierte Anwendung umfasst, wobei die Informationen in mindestens einer Datenbank (130; 201, 203) gespeichert werden, auf die ein Server (120), der das Verfahren durchführt, zugreifen kann, wobei das Verfahren Folgendes umfasst:
- Klassifizieren (210), in der mindestens einen Datenbank (130; 201, 203), der mindestens einen Anwendung in eine Gruppe unter mehreren Gruppen gemäß einer Wichtigkeit, die für jede der mindestens einen Anwendung festgelegt wird, wobei die Wichtigkeit, die für die mindestens eine Anwendung festgelegt wird, mit einem Indikator definiert wird,
- Bestimmen der Nutzung (220) von Netzwerkressourcen durch jede der mindestens einen Anwendung, indem mindestens eine vorbestimmte Charakteristik innerhalb des Netzwerks überwacht wird,
- Bestimmen (230), basierend auf der Nutzung der Netzwerkressourcen, von mindestens einem Netzwerkparameter für jede der Gruppen, wobei der mindestens eine Netzwerkparameter eine Netzwerkkonfiguration bezüglich einer Gruppe repräsentiert,
- Bestimmen (240), durch Abrufen von Informationen aus der mindestens einen Datenbank (130; 201, 203) über die mindestens eine Anwendung, mit der der mindestens eine Benutzer assoziiert ist, einer Gruppe, in der mindestens eine wichtigste Anwendung, die mit dem Benutzer assoziiert ist, vorhanden ist, und
- Bereitstellen (250) des Dienstniveaus im Netzwerk an den Benutzer, indem der mindestens eine Netzwerkparameter, der der bestimmten Gruppen entspricht, festgelegt wird.

2. Verfahren nach Anspruch 1, wobei die Wichtigkeit, die für jede der mindestens einen Anwendung festgelegt wird, individuell für jede der mindestens einen Anwendung definiert wird, wobei die Wichtigkeit, die für die mindestens eine Anwendung festgelegt wird, mit einem Indikator definiert wird.

3. Verfahren nach Anspruch 1, wobei die Wichtigkeit, die für jede der mindestens einen Anwendung festgelegt wird, durch Klassifizieren von jeder der mindestens einen Anwendung zu einer oder mehreren vorbestimmten Anwendungsgruppen definiert wird, wobei die Anwendungsgruppen eine individuelle Wichtigkeit umfassen, wobei die Wichtigkeit, die für die mindestens eine Anwendung festgelegt wird, mit dem Indikator definiert wird.

4. Server (120), der ausgelegt ist zum Bereitstellen eines Dienstniveaus in einem Netzwerk für einen Benutzer, wobei das Netzwerk Informationen über den mindestens einen Benutzer und Informationen über mindestens eine mit dem mindestens einen Benutzer assoziierte Anwendung umfasst, wobei die Informationen in mindestens einer Datenbank (130; 201, 203) gespeichert werden, auf die der Server (120) zugreifen kann, wobei der Server (120) Folgendes umfasst:
einen oder mehrere Prozessoren (420),
einen Speicher (430) einschließlich Computerprogrammcode, wobei, wenn der Computerprogrammcode auf dem einen oder den mehreren Prozessoren (420) ausgeführt wird, der Server (120) veranlasst wird zum:
- Klassifizieren (210), in der mindestens einen Datenbank (130; 201, 203), der mindestens einen Anwendung in eine Gruppe unter mehreren Gruppen gemäß einer Wichtigkeit, die für jede der mindestens einen Anwendung festgelegt wird, wobei die Wichtigkeit, die für die mindestens eine Anwendung festgelegt wird, mit einem Indikator definiert wird,
- Bestimmen der Nutzung (220) von Netzwerkressourcen durch jede der mindestens einen Anwendung, indem mindestens eine vorbestimmte Charakteristik innerhalb des Netzwerks überwacht wird,
- Bestimmen (230), basierend auf der Nutzung der Netzwerkressourcen, von mindestens einem Netzwerkparameter für jede der Gruppen, wobei der mindestens eine Netzwerkparameter eine Netzwerkkonfiguration bezüglich einer Gruppe repräsentiert,
- Bestimmen (240), durch Abrufen von Informationen aus der mindestens einen Datenbank (130; 201, 203) über die mindestens eine Anwendung, mit der der mindestens eine Benutzer assoziiert ist, einer Gruppe, in der mindestens eine wichtigste Anwendung, die mit dem Benutzer assoziiert ist, vorhanden ist, und
- Bereitstellen (250) des Dienstniveaus im Netzwerk an den Benutzer, indem der mindestens eine Netzwerkparameter, der der bestimmten Gruppen entspricht, festgelegt wird.

5. Server (120) nach Anspruch 4, wobei der Server (120) ausgelegt ist zum individuellen Definieren der Wichtigkeit, die für jede der mindestens einen Anwendung festgelegt wird, für jede der mindestens einen Anwendung, wobei die Wichtigkeit, die für die mindestens eine Anwendung festgelegt wird, mit dem Indikator definiert wird.

6. Server (120) nach Anspruch 5, wobei der Server (120) ausgelegt ist zum Definieren der Wichtigkeit, die für jede der mindestens einen Anwendung festgelegt wird, durch Klassifizieren von jeder der mindestens einen Anwendung zu einer oder mehreren vorbestimmten Anwendungsgruppen, wobei die Anwendungsgruppen eine individuelle Wichtigkeit umfassen, wobei die Wichtigkeit, die für die mindestens eine Anwendung festgelegt wird, mit dem Indikator definiert wird.

## Revendications

1. Procédé pour fournir un niveau de service dans un réseau pour un utilisateur, dans lequel le réseau comprend des informations sur le ou les utilisateurs et des informations sur au moins une application associée à l'utilisateur ou aux utilisateurs dans lequel les informations sont stockées dans au moins une base de données (130 ; 201, 203) accessible par un serveur (120) exécutant le procédé, le procédé comprenant :
- le classement (210), dans la ou les bases de données (130 ; 201, 203), d'au moins une application dans un groupe parmi plusieurs groupes en fonction d'une importance attribuée à l'application ou à chacune des applications, dans lequel l'importance attribuée à l'application ou aux applications est définie par un indicateur,
- la détermination de l'utilisation (220) de ressources du réseau par l'application ou chacune des applications en surveillant au moins une caractéristique prédéterminée au sein du réseau,
- la détermination (230), en fonction de l'utilisation des ressources du réseau, d'au moins un paramètre du réseau pour chacun des groupes dans lequel le ou les paramètres du réseau représentent une configuration du réseau par rapport à un groupe,
- la détermination (240), en extrayant des informations de la base ou des bases de données (130 ; 201, 203) sur la ou les applications auxquelles le ou les utilisateurs sont associés, d'un groupe dans lequel il existe au moins une application plus importante de toutes, associée à l'utilisateur, et
- la fourniture (250) à l'utilisateur du niveau de service sur le réseau en définissant l'au moins un paramètre du réseau correspondant au groupe déterminé.

2. Procédé selon la revendication 1, dans lequel l'importance attribuée à l'application ou chacune des applications, dans lequel l'importance attribuée à l'application ou aux applications est définie par l'indicateur, est définie individuellement pour l'application ou chacune des applications.

3. Procédé selon la revendication 1, dans lequel l'importance attribuée à l'application ou chacune des applications, dans lequel l'importance attribuée à l'application ou aux applications est définie par l'indicateur, est définie en classant l'application ou chacune des applications en un ou plusieurs l'application ou groupes d'applications prédéterminés, les groupes d'applications comprenant une importance individuelle.

4. Serveur (120) configuré pour fournir un niveau de service dans un réseau pour un utilisateur, dans lequel le réseau comprend des informations sur le ou les utilisateurs et des informations sur au moins une application associée à l'utilisateur ou aux utilisateurs, dans lequel les informations sont stockées dans au moins une base de données (130; 201, 203) accessible par le serveur (120), le serveur (120) comprenant :
un ou plusieurs processeurs (420),
une mémoire (430) comprenant du code de programme informatique,
lorsqu'il est exécuté sur le ou les processeurs (420), le code de programme informatique amène le serveur (120) à :
- classer (210), dans la ou les bases de données (130 ; 201, 203), la ou les applications dans un groupe parmi plusieurs groupes en fonction d'une importance attribuée à l'application ou chacune des applications, dans lequel l'importance attribuée à l'application ou aux applications est définie par un indicateur,
- déterminer l'utilisation (220) des ressources du réseau par l'application ou chacune des applications en surveillant au moins une caractéristique prédéterminée au sein du réseau,
- déterminer (230), en fonction de l'utilisation des ressources du réseau, au moins un paramètre du réseau pour chacun des groupes dans lequel le ou les paramètres du réseau représentent une configuration du réseau par rapport à un groupe,
- déterminer (240), en extrayant des informations de la base ou des bases de données (130 ; 201, 203) sur la ou les applications auxquelles le ou les utilisateurs sont associés, un groupe dans lequel il existe au moins une application plus importante de toutes, associée à l'utilisateur, et
- fournir (250) à l'utilisateur le niveau de service sur le réseau en définissant l'au moins un paramètre du réseau correspondant au groupe déterminé.

5. Serveur (120) selon la revendication 4, dans lequel le serveur (120) est configuré pour définir l'importance attribuée à l'application ou chacune des applications individuellement pour l'application ou chacune des applications dans lequel l'importance attribuée à l'application ou aux applications est définie par un indicateur.

6. Serveur (120) selon la revendication 5, dans lequel le serveur (120) est configuré pour définir l'importance attribuée à l'application ou chaque application en classant l'application ou chacune des applications dans un ou plusieurs groupes d'applications prédéterminés, les groupes d'applications comprenant une importance individuelle, dans lequel l'importance attribuée à l'application ou aux applications est définie par un indicateur.
